Europäisches Patentamt

European Patent Office

Office européen des brevets

(11) Publication number: **0 100 138**
A2

# EUROPEAN PATENT APPLICATION

(21) Application number: **83303129.7**

(51) Int. Cl.³: **B 29 D 3/02**

(22) Date of filing: **01.06.83**

(30) Priority: **23.07.82 GB 8221329**

(43) Date of publication of application: **08.02.84**
Bulletin 84/6

(84) Designated Contracting States: **DE FR IT NL**

(71) Applicant: **FISCO PRODUCTS LIMITED, Brook Road, Rayleigh Essex. SS6 7XD (GB)**

(72) Inventor: **Fisher, John Richard, 62 Highgate West Hill, London N6 6BU (GB)**
Inventor: **Pollak, Janet Ann, 20 Fairhazel Gardens, London NW6 3 SJ (GB)**
Inventor: **Kohler, Joseph Francis, 45 Broadclyst Gardens, Thorpe Bay Essex (GB)**

(74) Representative: **Wisher, Michael Frederick et al, Urquhart-Dykes & Lord 47 Marylebone Lane, London W1M 6DL (GB)**

(54) **Measuring tape.**

(57) A measuring tape and a method of forming same in which glass yarn is used to form a longitudinal reinforcement layer and give dimensional stability to the tape and natural or artificial fibres in random order are combined with the glass yarn layer to give resistance to tearing and maintain flexibility.

EP 0 100 138 A2

- 1 -

## TITLE

"Measuring tape"

## INTRODUCTION

This invention relates to a measuring tape and to a method of forming a measuring tape.

## PRIOR ART

Steel measuring tapes have been known for very many years and also linen or similar woven material covered in plastics has been used. In more recent years tapes made of glass fibre covered in plastics have been made. The plastics material used is normally polyvinyl chloride (PVC).

The incorporation of glass yarn (made up of strands) into the PVC of a measuring tape inhibits dimensional instability in the longitudinal direction but such tapes are prone to splitting in the longitudinal direction if the tape is snaged by, for example, a nail.

0100138

In order to avoid this longitudinal splitting of the tape, instead of longitudinal orientated yarn being incorporated in the PVC, a woven material has been incorporated. This material may be glass yarn for the warp threads and plastics filaments for the weft threads. This effectively prevents splitting but dimensional stability is poor.

It is also known to utilise so called 'non-woven' glass or other man-made fibres and possibly to utilise a bonding agent to provide a mat of such fibres arranged in random order. Such a mat exhibits great flexibility and strength and resistance to tearing.

OBJECT OF THE INVENTION

It is the main object of this invention to provide a measuring tape which has good dimensional stability and is resistant to tearing.

STATEMENTS OF INVENTION

According to the present invention there is provided a method of forming a measuring tape which includes combining glass yarn in parallel array with natural or artificial fibres in random order and providing on at least one face thereof a smooth plastics coating. Preferably the yarn and fibres are encased in a plastics covering. **The invention also includes the method as above** in which the yarn is combined with natural or artificial fibres in a bonding agent.

The invention also includes the method as above in which the glass yarn is established in its array by the use of a bonding agent to form a yarn layer, the fibres

BAD ORIGINAL

are established in their random order by bonding to form a fibre layer and the yarn and fibre layers are encased to form a lamination in a covering.

The invention further includes the method as above in which the glass yarn is established in its array by the use of a bonding agent to form a yarn layer, the fibres are established in random order by bonding to form two fibre layers and the yarn layer is sandwiched between the two fibre layers and the whole encased in a plastics covering.

Still further the invention includes the method as above and including establishing the glass yarn in its array by use of a bonding agent to form a yarn layer and encapsulating the yarn layer in a covering layer of plastics which incorporates natural or artificial fibres in random order.

Conveniently the covering is extruded around the yarn layer.

The fibre layer or layers may be composed of nylon, polyester, glass or carbon or other natural or artificial fibres in random order.

DRAWINGS

Figure 1 is a perspective view of a part of a known measuring tape incorporating glass yarn;

Figure 2 is a perspective view of a layer of PVC incorporating glass fibres in random order;

Figure 3 is a perspective view of glass yarn established in a layer by a bonding agent;

Figure 4 is a perspective view partly broken away to show the detail of a measuring tape constructed in accordance with the invention;

Figure 5 is a perspective view of a laminated pre-tape according to the invention;

Figure 6 is a perspective view partly broken away of a further embodiment of a measuring tape constructed in accordance with the invention; and

Figure 7 is a perspective view of an alternative form of pre-tape according to the invention.

### SPECIFIC DESCRIPTION

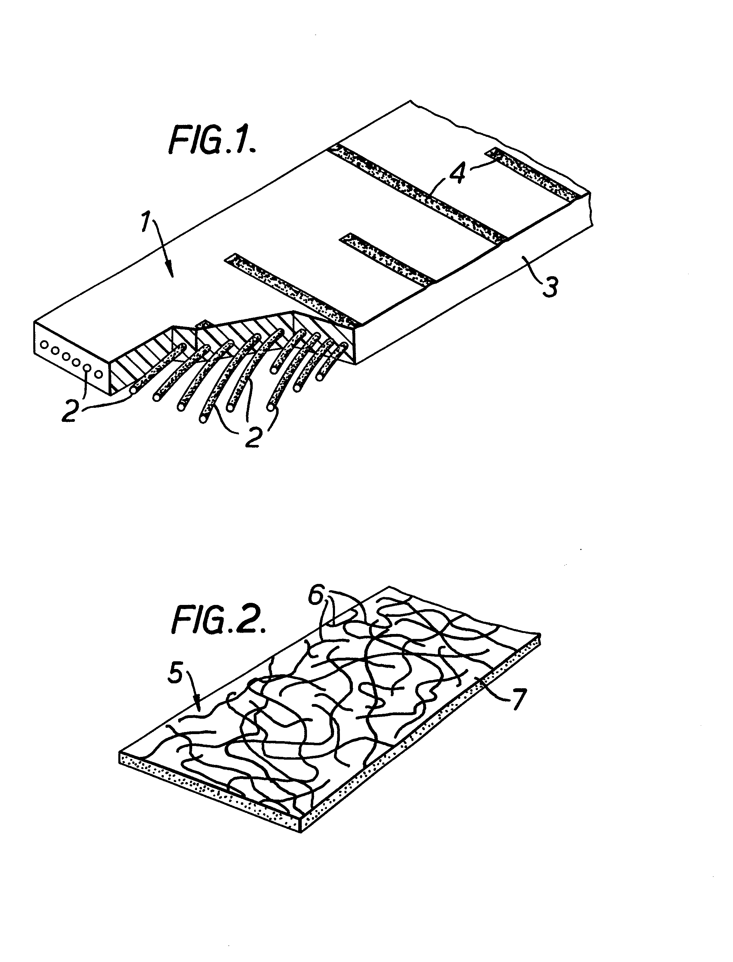

Part of a conventional reinforced plastics measuring tape is illustrated in Figure 1 in which the tape 1 includes a plurality (in the order of forty) of glass yarns 2 which are encapsulated within a PVC covering 3, there being graduations 4 marked thereon. Such measuring tapes are quite well known.

Figure 2 illustrates a layer 5 in which natural or artificial fibres 6 are arranged in random order and incorporated within a PVC matrix 7. The fibre 6 may be incorporated within the PVC matrix 7 by any known technique, for example by extruding or by moulding.

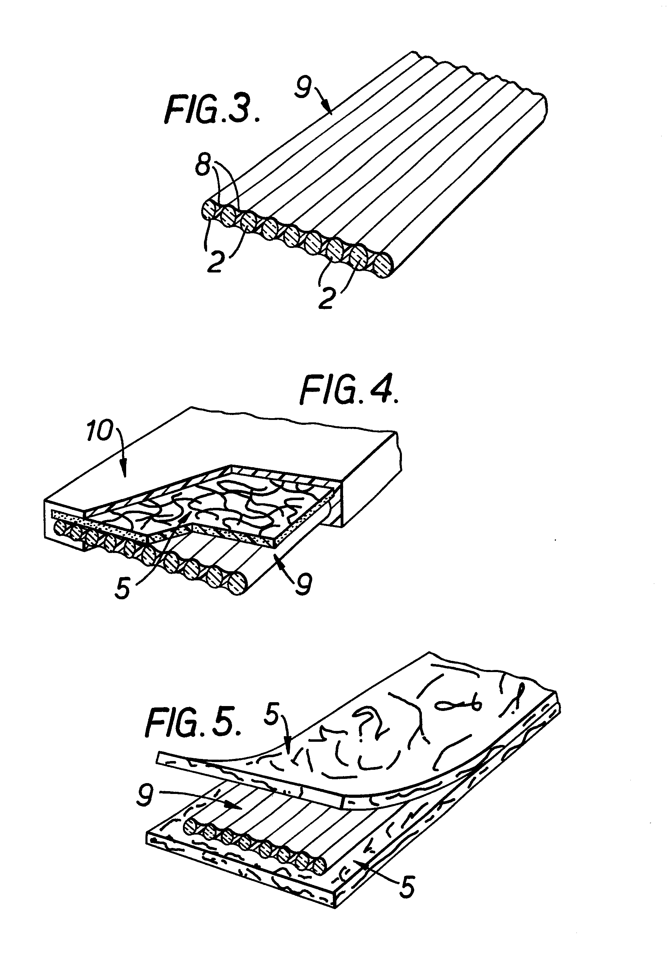

Figure 3 illustrates a plurality of glass fibre yarns 2 similar to the yarns 2 of Figure 1 but in this instance the yarns have been adhesively secured together by a bonding agent 8 (although this is not essential) to form a glass yarn layer 9. Here again the layer 9 may be established by any known technique. The bonding agent may be as desired, for example, a plasticised PVC paste including stabilisers.

In accordance with the invention and referring now to Figure 4 a layer 5 made in accordance with the Figure 2 laminated with a layer 9 in accordance with Figure 3 and the two layers encapsulated in a PVC covering 10. This covering 10 may be established by any known technique, for example extruding or moulding. Instead of encapsulating the layers in the PVC, the plastics may be applied to one face or both faces as a coating.

It will be appreciated that the incorporation of the longitudinally extending yarn in layer 9 gives good dimensional stability to the tape and the incorporation of the random order fibres in layer 5 gives good strength and prevents splitting of the tape. At the same time adequate flexibility of the tape is achieved.

The layer or layers of random fibres may be established by the use of a bonding agent although, if the fibres are artificial, the layer or layers may be established simply by the use of heat and pressure.

An alternative embodiment is illustrated in Figure 5 in which a layer 9 in accordance with Figure 3 is sandwiched between two layers 5 in accordance with Figure 2. The three layer sandwich is then encapsulated in PVC by any known tecnique or faced on one or both faces with a coating of PVC

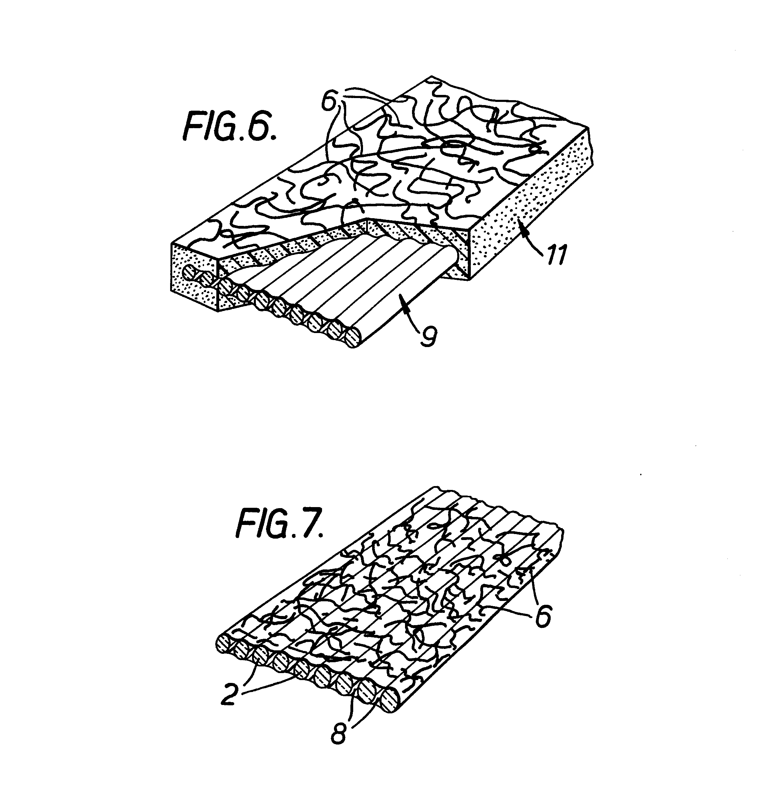

Yet a further embodiment is illustrated in Figure 6

BAD ORIGINAL

in which a layer 9 of glass yarn in accordance with Figure 3 has formed around it by any known techinique, for example extrusion or moulding, an encapsulating covering 11 (or facing) which incorporates natural or artificial fibres 6 in random order in a similar manner to the layer 5 of Figure 2.

As an alternative method of construction, a pre-tape may be formed in accordance with Figure 7 in which longitudinal glass yarn 2 is combined with random natural or artificial fibres 6 in a bonding agent 8. This may be done by coating the yarn with a bonding agent and, while the agent is still uncured, passing the coated yarn through a container in which loose fibres are being circulated by hot air. Thus the yarn becomes coated with fibres and the bonding agent is cured.

0100138

CLAIMS

1.    A method of forming a masuring tape which includes combining glass yarn in parallel array with natural or artificial fibres in random order and providing on at least one face thereof a smooth plastics coating.

2.    The method as claimed in Claim 1, in which the glass yarn is established in its array by the use of a bonding agent to form a yarn layer, the fibres are established in their random order by bonding to form a fibre layer and the yarn and fibre layers are encased to form a lamination in a covering.

3.    The method as claimed in Claim 1, in which the glass yarn is established in its array by the use of a .bonding agent to form a yarn layer, the fibres are established in random order by bonding to form two fibre layers and the yarn layer is sandwiched between the two fibre layers and the whole encased in a plastics covering.

4.    The method as claimed in Claim 1, in which the glass yarn is established in its array by the use of a bonding agent to form a yarn layer which is encapsulated in a covering layer of plastics which incorporates natural or artificial fibres in random order.

5.    The method as claimed in any one of the preceding claims, in which the yarn is combined with natural or artificial fibres in a bonding agent.

6.    The method of forming a measuring tape substantially as herein described with reference to Figures 4 or Figure 5 or Figure 6 or Figure 7 of the accompanying drawings.

7.    A measuring tape when formed by the method as claimed in any one of the preceding claims.

8.    A measuring tape as claimed in Claim 7, in which the natural or artifical fibres are composed of nylon, polyester, glass or carbon or other natural fibres.

FIG.1.

FIG.2.

FIG.3.

FIG.4.

FIG.5.

**FIG.6.**

**FIG.7.**